# EUROPEAN PATENT SPECIFICATION

(11) **EP 1 013 203 B1**
(45) Date of publication and mention of the grant of the patent: **27.02.2002**
(21) Application number: 99308860.8
(22) Date of filing: 08.11.1999
(51) Int. Cl.: A47G 19/16, A47J 31/06

(54) **Brewing system**
Brühsystem
Système pour préparer des boissons

(30) Priority: 18.12.1998 GB 9828006; 15.04.1999 GB 9908633
(43) Date of publication of application: 28.06.2000
(73) Proprietor: UNILEVER PLC, London EC4P 4BQ (GB); UNILEVER N.V., 3013 AL Rotterdam (NL)
(72) Inventor: White, Adam, London W6 0RR (GB); Berry, Adrian, London W6 0RR (GB)
(74) Representative: Evans, Jacqueline Gail Victoria

(56) References cited:
- WO-A-95/15105
- DE-A- 4 432 547
- US-A- 4 345 512

## Description

The present invention relates to a brewing system for infusible substances, more particularly a tea pot arrangement for brewing loose as well as packaged tea.

### Background and prior art

With the exception of water, tea is the most widely consumed of all beverages. Its world-wide per capita consumption has been estimated at 0.1 litre per day. Leaf tea may be prepared as green leaf tea or black leaf tea. Methods of preparing such teas are well-known to those skilled in the art.

Nowadays Western consumers tend to buy tea in the form of tea bags. Many perceive that tea, the beverage, is best made from loose tea that is allowed to infuse freely for several minutes within a tea pot but they sacrifice those ideal conditions for the convenience of using tea bags. Loose tea after all needs to be measured. It can be spilt when transferring it from the packet to the pot. The infused tea needs to be strained. The used leaves must be collected and discarded (which can be a messy business). And the pot should be washed before the next use. Tea bags however contain discrete doses of tea. They often have strings and tags to facilitate handling. They can be placed directly into the pot, or even a cup or mug, and removed and discarded without the user ever having to come in direct contact with the leaves.

Tea bags suffer from the problem that the tea is confined to a volume that is small in comparison to the volume of the liquid in which they are placed. This restricts infusion and can significantly reduce the concentration of some of the less soluble but flavoursome tea compounds that would otherwise be liberated into the liquor. The use of three dimensional tea bags such as tetrahedral tea bags that provide substantially more infusing volume than two dimensional so-called "pillow" bags is known to minimise this effect. But using loose tea remains the ideal choice.

Tea bags can also suffer from the packaging material or sometimes affecting the taste of the tea. Selecting the packaging material can minimise this effect too, but often with cost implications. There is also a perception in the minds of some consumers that tea bags contain tea that is inferior in quality to that which is commercially available as loose tea. This is often false, but as consumers cannot see the tea that is contained in a paper tea bag some draw that conclusion.

Traditional tea pots are suitable for brewing loose tea however they suffer from the problem that if the tea is left brewing the infusion can quickly become too strong or "stewed". It is therefore desirable for the consumer to be able to remove the leaves from the infusing liquid when the infusion has attained the required strength.

The applicants believe there is a need to provide consumers with a brewing system such as a tea pot arrangement that is suitable for infusing loose tea but is more convenient to use than the traditional tea pot and has means to isolate infusing tea leaves from the infusing liquid to avoid stewing. The brewing system should also be robust enough to withstand frequent use and comprise a minimum of parts to facilitate washing and minimise material and production costs.

Various attempts have been made to provide a tea pot arrangement that avoids at least some of these problems.

German patent specification DE 4432547 A1 (alfi Zitzmann GmbH) discloses a tea pot that has an egg-shaped infusing vessel for containing leaves. The vessel is attached to a handle that can be used to raise or lower the vessel within the tea pot.

United States patent specification US 5,125,327 (Willington-Ingram), for example, discloses a tea pot and an infuser of an injection moulded skeletal structure of plastics material. The infuser has a porous wall and is inserted into a teapot in order to carry tea leaves in a lower region of the pot for infusion. The infuser has a handle which rests in a cut out in the teapot lid seat, and a cut out in its own upper wall area to accommodate a retaining tongue of the lid. This pot is suitable for infusing loose tea, but the consumer must remove the infuser from the pot to avoid stewing.

European patent specification EP 569435 (PI Design) discloses a tea pot arrangement that includes a cylindrically shaped filter unit. The upper part of the filter unit is permeable to water whereas the lower part is not. When tea is placed in the filter soluble solids are released into the pot but the tea remains within the confines of the filter. The pot arrangement includes a plunger which can push the tea from the upper part of the filter to the lower part of the filter thus isolating the tea from the infusion and avoiding stewing.

International patent application PCT/GB96/01598 published as WO 97/01981 (Tetley GB) discloses a tea pot that can isolate tea, especially round shaped tea bags, from an infusion. Mounted to the pot is a pivotal member which co-operates with a baffle means to define a region in the pot which receives the tea or tea bag. Both the pivotal member and baffle means are adapted to permit passage of the infusing liquid, but not the tea or tea bag. In use, the pivotal member is pivoted through the interior by moving a handle that lifts the used tea or tea bag out of the infusing liquid to halt the infusion process at the desired time.

The present inventors however believe they have developed a brewing system that more successfully meets the needs of consumers.

### Statement of the invention

In broad terms the present invention relates to a brewing system suitable for infusing an infusible substance that comprises a container for containing water that has a spout and a handle and an infusing device for containing an infusible substance that comprises a pair of cups, the brewing system being characterised in that the said container has a neck that has a diameter that is less than the average diameter of the infusing device so as to support the infusing device with one cup extending above the neck and the other cup extending into the interior of the container; the cups of the infusing device are detachably mountable to a central platform to form a pair of infusing chambers; and the cups and the platform are provided with air holes, the arrangement of the container and the infusing device is such that in use the infusible substance is loaded into one of the infusing chambers and the orientation of the infusing device is moveable between an infusing orientation whereby the infusing chamber that is loaded with the infusible substance is immersed in the water thus allowing it to infuse into the water and a non-infusing orientation whereby the infusing chamber that does not contain the infusible substance is immersed in the water while the infusing chamber that contains the infusible substance is suspended above the water and thus can no longer infuse into the water.

The infusing device is preferably provided with a handle to facilitate moving the infusing device between said infusing orientation and said non-infusing orientation.

Preferably the neck of the container is circular and the infusing device is spherical.

For the avoidance of doubt the word "comprising" is intended to mean including but not necessarily "consisting of" or "composed of". In other words the listed steps or options need not be exhaustive.

### Detailed description of the invention

The present invention relates to a brewing system for infusible substances, especially loose tea. The system comprises a container for containing water that has a spout and handle and an infusing device for containing an infusible substance.

The container defines a reservoir for the water. It is preferably transparent or has a transparent section or window to enable the consumer to monitor the extent of the infusion with reference to its colour. The container can be made of any suitable material. It should preferably resist staining and be strong enough to withstand frequent use and perhaps the occasional knock. Suitable materials include transparent polymers such as amorphous nylon or methyl-pentene. The container has a neck which is adapted to receive and support the infusing device. The arrangement is such that when the container has been filled with water the infusing device sits partially submerged in that water.

The infusing device of the brewing system of the invention comprises a pair of cups that are detachably mountable to a central platform to form a pair of infusing chambers. The cups and the central platform are provided with air holes. These can take a variety of forms including a pattern of circular apertures or an arrangement of slits. In the preferred embodiment one of the cups is provided with a pattern of circular apertures so that the infusing chamber it defines with the central platform is suitable for containing and retaining loose tea, whereas the other cup is provided with an arrangement of slits so that the infusing chamber it defines with the central platform is suitable for containing tea bags. One skilled in the art could tailor the form of the infusing device to the intended use of the system.

It is especially preferred that the infusing device is substantially spherical and the neck of the container is circular with a diameter less than that of the infusing device.

The neck of the container and the shape of the infusing device is such that the infusing device can be moved using a rocking motion from an infusing orientation whereby the infusing chamber that is loaded with the infusible substance is immersed in the water thus allowing it to infuse into the water and a non-infusing orientation whereby the infusing chamber that does not contain the infusible substance is immersed in the water while the infusing chamber that contains the infusible substance is suspended above the water and thus can no longer infuse into the water.

The infusing device is preferably provided with a handle of some sort to facilitate moving the infusing device between the infusing orientation and the non-infusing orientation.

The infusing device can optionally be pivotably mountable to the container to facilitate moving the infusing device between the infusing orientation and the non-infusing orientation. This can be achieved by providing pins in opposite sides of the infusing device that engage correspondingly formed recesses in or adjacent the neck of the container.
The infusing device can be made of any material or materials that are suitable for its purpose. A tough plastics material is preferable when minimising costs. However stainless steel or some other substantially non-reactive easy cleaning metal can be used.

In the drawings:
Figure 1 is a perspective view of a preferred embodiment of the brewing system of the invention.
Figure 1a is a perspective view of various components of the preferred embodiment of the brewing system of the invention.
Figures 2a to 2c illustrate how the preferred embodiment of the brewing system shown in Figure 1 is used.

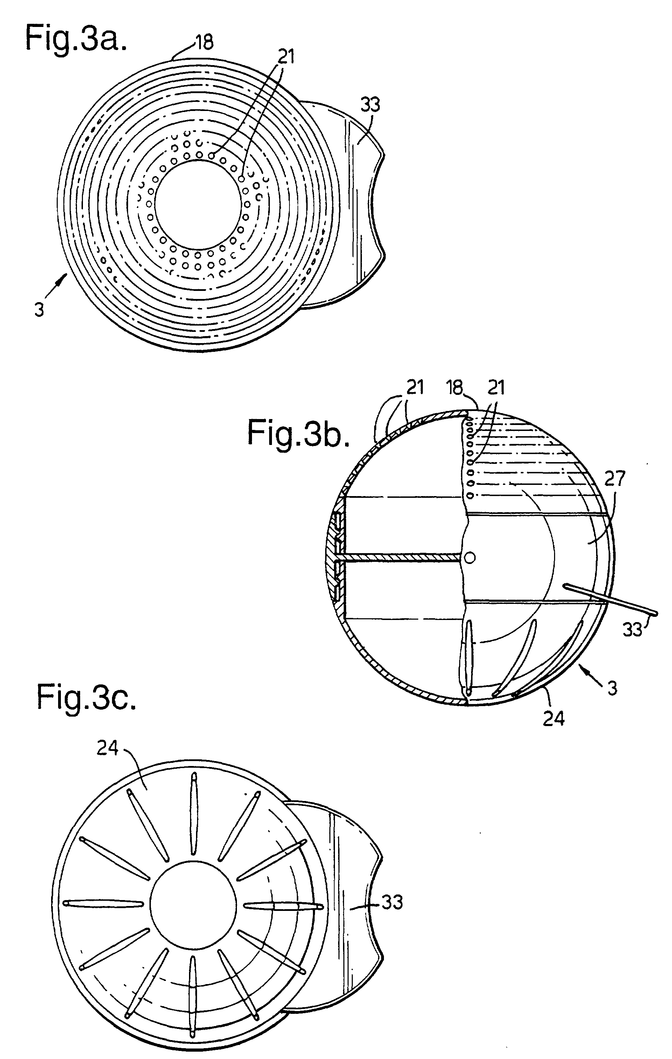

Figures 3a, 3b and 3c show the infusing device of the preferred embodiment from below, from the side and from above respectively.

The preferred embodiment of the brewing system of the invention comprises a brewing container 1 and an infusing device 3. The container 1 has a spout 6 and a handle 9. The handle 9 is attached to a collar 12 which includes an aperture that defines the neck 15 of the container.

The infusing device 3 of the preferred embodiment is substantially spherical. The neck 15 of the container as defined by the collar 12 is shaped to receive and support the infusing device in a position such that one half or an otherwise substantial portion of the infusing device extends into the interior of the container. This is achieved by the neck 15 defining a circular aperture having a diameter that approaches but does not equal the average diameter of the infusing device.

The infusing device of the brewing system of the invention is formed from two hemispheres with are detachably mountable to a central platform 16. The first hemisphere 18 of the infusing device 3 is provided with air or infusing holes 21 in the form of a pattern of circular apertures. These holes 21 cover a substantial proportion of the surface of the first hemisphere 18. The chamber formed between this hemisphere and the central platform is suitable for containing an infusible material in loose form such as leaf tea. The second hemisphere 24 of the infusing device 3 is provided with air or infusing holes in the form of an arrangement of slots. The chamber formed between this hemisphere and the central platform is suitable for containing an infusible material in a packaged form such as tea bags.

The first hemisphere 18 and the second hemisphere 21 are each screwed to an annular band 27 that surrounds the perimeter of the central platform 16. The second hemisphere 24 is provided with a heat guard 30 to provide some insulation for the consumer from the heat that dissipates from leaves that have been infused in hot water.

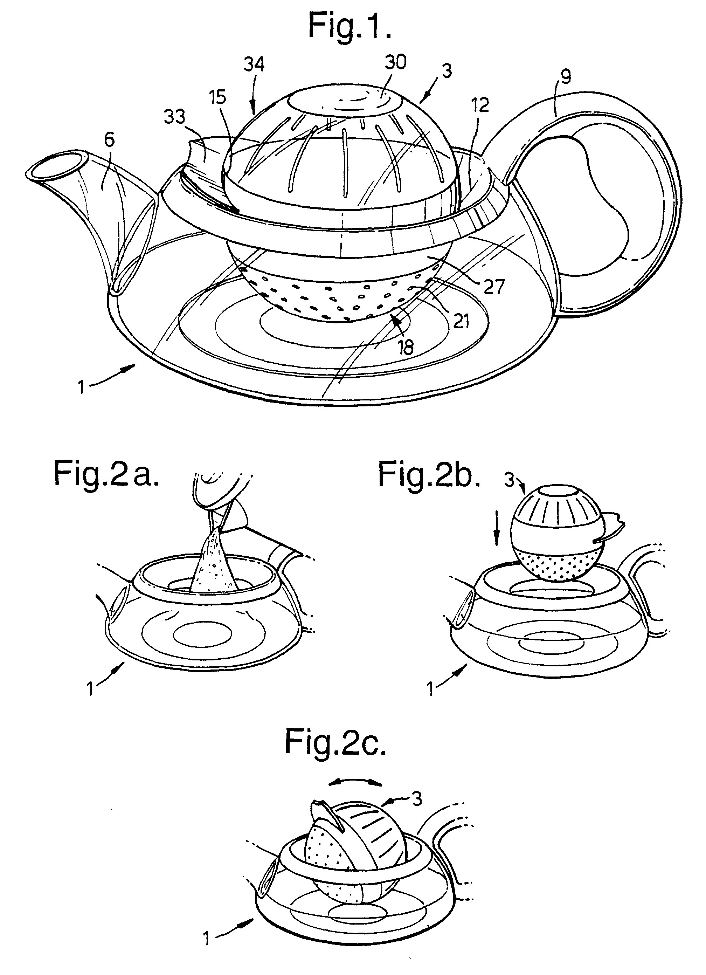

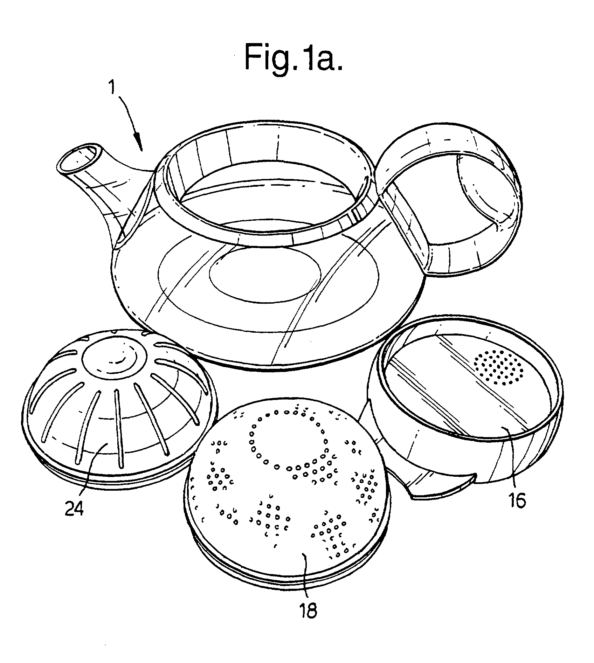

In use loose tea, for example, is loaded into the chamber defined by the first hemisphere 18 and the central platform 16. The infusing device is placed on the neck 15 of the container 1 which has been filled with freshly drawn and boiled water. The infusing device is moved into position so that the first hemisphere 18 is immersed in the water and infusion can occur. When infusion has taken place for a sufficient time, which can for example be measured with respect to the generation of desirable colour the infusing device is moved into the position that immerses the empty second hemisphere into the water. That action removes the loose tea from the water thus avoiding any further infusion. This movement is achieved by rocking the device within the neck 15 of the container 1 (See Figures 2a through 2c).

The infusing device is provided with a handle 33 to facilitate moving the infusing device between the infusing orientation and the non-infusing orientation.

## Claims

1. A brewing system suitable for infusing an infusible substance that comprises a container (1) for containing water that has (6) a spout and a handle (9) and an infusing device (3) for containing an infusible substance that comprises a pair of cups (18, 24),
the brewing system being **characterised in that** the container (1) has a neck (15) that has a diameter that is less than the average diameter of the infusing device so as to support the infusing device (3) with one cup extending above the neck (15) and the other cup extending into the interior of the container; the cups (18, 24) of the infusing device (3) are detachably mountable to a central platform (16) to form a pair of infusing chambers; and the cups (18, 24) and the platform are provided with air holes (21), whereby
the arrangement of the container (1) and the infusing device (3) is such that in use the infusible substance is loaded into one of the infusing chambers and the orientation of the infusing device (3) is moveable between an infusing orientation whereby the infusing chamber that is loaded with the infusible substance is immersed in the water thus allowing it to infuse into the water and a non-infusing orientation whereby the infusing chamber that does not contain the infusible substance is immersed in the water while the infusing chamber that contains the infusible substance is suspended above the water and thus can no longer infuse into the water.

2. A brewing system according to claim 1, wherein the cups (18, 24) are hemispherical.

3. A brewing system according to claim 1 or 2, wherein the neck (15) of the container (1) is circular and the infusing device (3) is substantially spherical.

4. A brewing system according to any preceding claim, wherein the air holes (21) take the form of a pattern of circular apertures or an arrangement of slits.

5. A brewing system according to any preceding claim, wherein the infusing device (3) is provided with a handle (33) to facilitate moving the infusing device between said infusing orientation and said non-infusing orientation.

6. A brewing system according to any preceding claim, wherein the infusing device (3) is pivotably mountable to the container () to facilitate moving the infusing device (3) between said infusing orientation and said non-infusing orientation.

## Patentansprüche

1. Brühsystem, das zum Aufgießen einer Aufgusssubstanz geeignet ist und einen Behälter (1) zur Aufnahme von Wasser mit einem Ausguss (6) und einem Griff (9) sowie eine Aufgusseinrichtung (3) zur Aufnahme einer Aufgusssubstanz mit einem Paar Schalen (18, 24) aufweist, **dadurch gekennzeichnet, dass** der Behälter (1) einen Hals (15) mit einem Durchmesser aufweist, der kleiner als der durchschnittliche Durchmesser der Aufgusseinrichtung ist, um die Aufgusseinrichtung (3) derart zu halten, dass sich eine Schale oberhalb des Halses (15) und die andere Schale in das Innere des Behälters erstreckt; die Schalen (18, 24) der Aufgusseinrichtung (3) zur Bildung eines Paares von Aufgusskammern abnehmbar an einer zentralen Plattform (16) angebracht sind und die Schalen (18, 24) und die Plattform mit Luftlöchern (21) versehen sind, wobei die Anordnung des Behälters (1) und der Aufgusseinrichtung (3) derart ist, dass die Aufgusssubstanz bei Gebrauch in eine der Aufgusskammern gefüllt ist und die Ausrichtung der Aufgusseinrichtung (3) zwischen einer Aufgießausrichtung, in der die mit der Aufgusssubstanz gefüllte Aufgusskammer im Wasser eintaucht und letztere so im Wasser ziehen kann, und einer Nichtaufgießausrichtung bewegbar ist, in der die keine Aufgusssubstanz enthaltende Aufgusskammer im Wasser eintaucht, während die die Aufgusssubstanz enthaltende Kammer über dem Wassergehalten ist und nicht mehr im Wasser ziehen kann.

2. Brühsystem nach Anspruch 1, worin die Schalen (18, 24) halbkugelförmig sind.

3. Brühsystem nach Anspruch 1 oder 2, worin der Hals (15) des Behälters (1) kreisförmig und die Aufgusseinrichtung (3) im Wesentlichen kugelförmig ausgebildet ist.

4. Brühsystem nach einem der vorhergehenden Ansprüche, worin die Luftlöcher (21) die Form eines Musters von kreisförmigen Öffnungen oder einer Schlitzanordnung haben.

5. Brühsystem nach einem der vorhergehenden Ansprüche, worin die Aufgusseinrichtung (3) mit einem Griff (33) versehen ist, um die Bewegung der Aufgusseinrichtung zwischen der Aufgießausrichtung und der Nichtaufgießausrichtung zu erleichtern.

6. Brühsystem nach einem der vorhergehenden Ansprüche, worin die Aufgusseinrichtung (3) schwenkbar am Behälter (1) montiert ist, um die Bewegung der Aufgusseinrichtung (3) zwischen der Aufgießausrichtung und der Nichtaufgießausrichtung zu erleichtern.

## Revendications

1. Système de préparation de boissons, adapté pour faire infuser une substance infusible, qui comprend un conteneur (1), destiné à contenir de l'eau, qui comporte un bec verseur (6) et une poignée (9), et un dispositif d'infusion (3) destiné à contenir une substance infusible qui comprend une paire de capsules (18, 24),
le système de préparation de boissons étant **caractérisé en ce que** le conteneur (1) comporte un col (15) qui possède un diamètre qui est inférieur au diamètre moyen du dispositif d'infusion de manière à supporter le dispositif d'infusion (3), une première capsule s'étendant au-dessus du col (15) et l'autre capsule s'étendant à l'intérieur du conteneur, les capsules (18, 24) du dispositif d'infusion (3) pouvant être montées d'une manière amovible sur une plate-forme centrale (16) afin de former une paire de chambres d'infusion, et les capsules (18, 24) et la plate-forme comportent des trous d'air (21),
l'agencement du conteneur (1) et du dispositif d'infusion (3) étant tel que, en utilisation, la substance infusible est introduite dans l'une des chambres d'infusion, et l'orientation du dispositif d'infusion (3) peut être basculée entre une orientation permettant l'infusion dans laquelle la chambre d'infusion qui contient la substance infusible est immergée dans l'eau, lui permettant ainsi d'infuser dans l'eau, et une orientation ne permettant pas l'infusion dans laquelle la chambre d'infusion qui ne contient pas la substance infusible est immergée dans l'eau, tandis que la chambre d'infusion qui contient la substance infusible est positionnée au-dessus de l'eau et, par conséquent, ne peut plus infuser dans l'eau.

2. Système de préparation de boissons selon la revendication 1, dans lequel les capsules (18, 24) sont hémisphériques.

3. Système de préparation de boissons selon la revendication 1 ou 2, dans lequel le col (15) du conteneur (1) est circulaire et le dispositif d'infusion (3) est sensiblement sphérique.

4. Système de préparation de boissons selon l'une quelconque des revendications précédentes, dans lequel les trous d'air (21) prennent la forme d'un motif composé d'ouvertures circulaires ou d'un agencement de fentes.

5. Système de préparation de boissons selon l'une quelconque des revendications précédentes, dans lequel le dispositif d'infusion (3) comporte une poignée (33) afin de faciliter le basculement du dispositif d'infusion entre ladite orientation permettant l'infusion et ladite orientation ne permettant pas l'infusion.

6. Système de préparation de boissons selon l'une quelconque des revendications précédentes, dans lequel le dispositif d'infusion (3) peut être monté d'une manière pivotante sur le conteneur afin de faciliter le basculement du dispositif d'infusion (3) entre ladite orientation permettant l'infusion et ladite orientation ne permettant pas l'infusion.
